# FASCICULE DE BREVET EUROPEEN

(11) **EP 1 787 828 B1**
(45) Date de publication et mention de la délivrance du brevet: **18.02.2009**
(21) Numéro de dépôt: 06123778.0
(22) Date de dépôt: 09.11.2006
(51) Int. Cl.: B60C 17/02

(54) **Système de roulage à plat comprenant des cellules autogonflantes**
Notlaufsystem, das selbstaufblasbare Zellen enthält.
Run-flat system comprising self inflating cells

(30) Priorité: 22.11.2005 FR 0511928
(43) Date de publication de la demande: 23.05.2007
(73) Titulaire: Société de Technologie Michelin, 63000 Clermont-Ferrand (FR); Michelin Recherche et Technique S.A., 1763 Granges-Paccot (CH)
(72) Inventeur: Vervaet, Patrick, 63000, CLERMONT-FERRAND (FR); Boissonnet, Monique, 63100, CLERMONT-FERRAND (FR)
(74) Mandataire: Dequire, Philippe Jean-Marie Denis

(56) Documents cités:
- DE-A1- 1 953 824
- GB-A- 2 329 160

## Description

L'invention concerne certains types d'ensembles de roulage à plat destinés à équiper les véhicules automobiles. Ces ensembles comportent une jante dotée d'une valve et un pneumatique, monté sur la jante. Selon l'état de la technique concernant la réalisation de ce type d'ensemble, l'espace intérieur compris entre la paroi interne du pneumatique et la jante est occupé par un moyen destiné à supporter temporairement la charge lorsque la pression à l'intérieur du volume intérieur chute accidentellement.

Dans le cadre plus précis du domaine de l'invention, ces moyens peuvent être constitués par une pluralité de cellules fermées, à paroi souples et étanches, élastiques ou non élastiques, et contenant une quantité donnée de gaz éventuellement sous pression. Ces éléments cellulaires fermés, formant autant de compartiments étanches, peuvent être indépendants les uns des autres, ou être reliés par leurs cotés ou leurs extrémités de manière à former des bandes ou des ensembles d'une longueur donnée comprenant plusieurs éléments cellulaires fermés.

Lors de la mise sous pression du pneumatique les cellules sont comprimées et la pression des gaz qu'elles contiennent s'équilibre avec la pression de gonflage de telle manière que le volume des cellules n'occupe plus qu'une fraction du volume intérieur du pneumatique.

En cas de perte de pression, les cellules se redéploient et contribuent à équilibrer la charge, moyennant une augmentation de la flèche du pneumatique. Seules les cellules au droit de la perforation de la bande de roulement peuvent éventuellement être détériorées, et la charge est alors répartie sur les cellules adjacentes.

Un premier exemple de ce type d'application est décrit dans le brevet US 3 256 123 dans laquelle des balles élastiques contenant un gaz sous pression sont disposées dans l'espace intérieur d'un pneumatique.

Un autre exemple de ce type est divulgué dans le brevet DE 1 953 824, dans laquelle des portions de tubes souples, d'un volume déterminé non extensible, sont réalisés à l'aide d'un matériau non élastique. La paroi des tubes est formée à partir de feuilles thermo soudables de chlorure de polyvinyle ou de polyuréthane non élastique de faible épaisseur. La totalité du volume de chaque cellule est remplie d'air à une pression donnée, supérieure à la pression atmosphérique. Des chapelets de tubes sont disposés à l'intérieur du volume compris entre la paroi intérieure du pneumatique et de la jante.

Il est également connu de réaliser, selon la nature des matériaux employés, des joints étanches entre deux feuilles de matériaux plastiques ou élastiques, soit par collage comme le décrit la publication US 3 574 317, soit par thermo soudure comme le décrit la publication US 6 539 994.

On remarque néanmoins que dans chacune des variantes de réalisation exposée ci-dessus, à l'air libre et sous l'effet de la pression interne des gaz qu'elles contiennent, les cellules équilibrent leur pression avec la pression atmosphérique. Lesdites cellules vont alors occuper un volume correspondant sensiblement au volume qu'elles occupent lorsqu'elles sont disposées dans l'espace intérieur d'un pneumatique non gonflé. Ceci a pour conséquence d'imposer la mise en oeuvre de moyens particuliers pour procéder à l'introduction des dites cellules dans le volume intérieur du pneumatique et de limiter le volume de gaz qu'il est possible de mettre dans lesdites cellules.

L'objectif de la présente invention est de proposer une solution permettant de supprimer ces inconvénients.

A cet effet, il est proposé de réaliser des éléments cellulaires fermés, ayant des parois formées à partir de feuilles souples de faible épaisseur et étanches aux gaz ; chaque élément cellulaire est rempli d'une quantité donnée d'une composition chimique, solide ou liquide à température ambiante, et passant à l'état gazeux par changement de phase ou par déplacement d'un équilibre chimique à une température supérieure à la température ambiante et généralement comprise entre 40°C et 80°C.

A température ambiante, les éléments cellulaires occupent un volume réduit et il est facile d'introduire un nombre donné desdites cellules dans l'espace intérieur du pneumatique avant d'achever l'opération de montage du pneumatique sur la jante.

Lors du roulage, la température à l'intérieur de l'enveloppe va monter du fait de la dissipation de calories liée aux mouvements du pneumatique. Cette augmentation de température, au-delà d'un certain seuil, va amorcer la réaction chimique produisant un composé gazeux qui va occuper le volume de l'élément cellulaire.

Le choix de la température à laquelle la composition chimique passe à l'état gazeux, et par voie de conséquence la détermination de la nature et du dosage de ses composants, dépend des conditions permettant d'initier cette réaction. Une température trop basse conduirait à initier la réaction pendant les phases industrielles de mise en oeuvre, une température trop élevée exigerait des apports thermiques importants, difficilement atteignables dans les conditions normales de roulage d'un véhicule. En pratique une température supérieure de 20°C à la température ambiante permet de répondre à la plupart des conditions d'usage.

La réaction chimique peut être de nature réversible ou irréversible. En pratique on observera que lorsque le composé passe à l'état gazeux, cela entraîne une augmentation de pression à l'intérieur de l'enceinte du pneumatique. Il est donc nécessaire d'ajuster la pression en enlevant la quantité d'air nécessaire de manière à obtenir une pression d'équilibre égale à la pression d'utilisation du pneumatique.

Dans ces conditions on préférera une composition chimique dont le passage à l'état gazeux est le produit d'une réaction irréversible. En effet, il est alors possible de provoquer le changement de phase soit à l'occasion du premier usage du pneumatique, soit directement en phase finale du processus de montage, ce qui permet de conserver une pression d'utilisation stable.

Ainsi la décomposition par réaction d'un mélange de bicarbonate de soude avec de l'acide citrique et aboutissant à la formation de gaz carbonique offre un bon exemple de composition chimique permettant de mettre en oeuvre l'invention.

Il est également possible d'introduire une composition à base de bicarbonate d'ammonium qui se décompose en gaz carbonique aux températures souhaitées, mais qui forme une réaction dont l'équilibre varie avec la température.

Le choix de composés volatiles dans la plage de température désirée, tels que l'acétone, l'hexane, l'acétate d'éthyle ou le chlorure de méthylène peut s'avérer également intéressant mais présente l'inconvénient de présenter, en cas de fuite, de fortes restrictions environnementales.

La quantité de composé chimique qu'il est nécessaire d'introduire dépend de la composition chimique elle-même et du nombre de moles de gaz que l'on désire obtenir dans chacun des éléments cellulaires.

Selon un premier mode de réalisation, on ajuste la quantité de composé de manière à ce que le volume de l'ensemble des éléments cellulaires, à la suite de la réaction chimique ou du changement de phase de la composition, et à la pression et à la température d'utilisation du pneumatique, soit égal à une fraction du volume intérieur total délimité par la jante et la surface intérieure du pneumatique.

En effet, il est n'est pas souhaitable que, en condition normale de roulage, les éléments alvéolaires situés radialement à l'extérieur soient en contact avec la paroi intérieure du pneumatique. Aussi cherche t-on à éviter que les flexions imposées au pneumatique à chaque tour de roue ne se transmettent aux éléments alvéolaire, ce qui aurait pour conséquence de provoquer un travail élastique des parois des dits éléments entraînant un échauffement non désiré et une perturbation de l'équilibre thermique du système. En pratique la fraction de volume occupé est de l'ordre de 40% à 70% du volume total de l'espace intérieur du pneumatique et se situe plus favorablement entre 50% à 60% dudit volume total.

Dans ces conditions, lors de l'utilisation du pneumatique en mode gonflé, la pression du gaz contenu dans les éléments cellulaires s'équilibre avec la pression dans le reste de l'espace intérieur du pneumatique.

Le choix de la nature du matériau constitutif des parois des éléments cellulaires constitue un autre facteur de réglage d'un système conforme à l'invention selon ce premier mode de réalisation.

Le choix d'un matériau élastique permet de réaliser des éléments cellulaires dont le volume peut en principe augmenter sans limite pour équilibrer la pression interne régnant au sein des éléments cellulaires avec la pression régnant dans le reste de l'enceinte. Cependant, la fabrication d'éléments cellulaires fermés et parfaitement étanches avec ce type de matériau nécessite en général l'usage de moyens générant de la chaleur en quantité importante. Cette source de chaleur est susceptible de provoquer la réaction de transformation sous forme gazeuse des composés chimiques préalablement insérés l'espace intérieur de l'élément cellulaire. Ce qui aurait pour effet d'amoindrir, et dans les cas extrêmes de rendre inopérant l'avantage recherché qui est de provoquer cette réaction après l'opération de montage du pneumatique sur la jante. De plus en cas de pénétration d'un objet contondant dans la cavité du pneumatique, il se peut dans certaines conditions que, du fait de l'extensibilité des parois, les cloisons viennent successivement en contact avec l'indenteur, ce qui aura pour effet de provoquer la perforation des parois d'un grand nombre de cellules.

Le choix d'un matériau non élastique constitue donc le mode préféré de réalisation d'un système conforme à l'invention.

On introduit dans l'espace intérieur du pneumatique un nombre d'éléments cellulaires déterminé de telle manière que le volume formé par la somme du volume maximum de chacun des éléments cellulaires soit supérieur au volume intérieur délimité par la jante et la surface interne du pneumatique.

Selon ce premier mode de réalisation, en cas de chute de pression accidentelle dans l'espace non occupé par les éléments cellulaires, le gaz contenu dans lesdits éléments cellulaires va alors se détendre. La totalité de l'espace intérieur du pneumatique est ainsi occupé par les éléments cellulaires qui contribuent ainsi à supporter la charge portée par ledit pneumatique. La pression d'usage équivalente est sensiblement égale à la moitié de la pression normale d'utilisation.

Selon un autre mode préféré de réalisation de l'invention, on choisit également de réaliser les parois des éléments cellulaires avec un matériau sensiblement non élastique.

On introduit dans l'espace intérieur du pneumatique un nombre d'éléments cellulaires déterminé de telle manière que le volume formé par la somme du volume maximum de chacun des éléments cellulaires corresponde à la fraction désirée du volume intérieur délimité par la jante et la surface interne du pneumatique.

Cette disposition nécessite de remplir les éléments cellulaires d'une quantité de composition chimique délivrant, après la réaction chimique ou le changement de phase du composé, une quantité de gaz telle que la pression à l'intérieur des éléments cellulaires soit supérieure à la pression normale d'utilisation du pneumatique. Les éléments cellulaires se déploient alors à leur volume maximum au sein de l'espace intérieur formé par la jante et le pneumatique, et occupent la fraction du volume dudit espace. La fraction de volume occupé est de l'ordre de 50% à 60% du volume total de l'espace intérieur du pneumatique et sera déterminée en fonction du taux d'affaissement que le pneumatique est susceptible de subir en cas de roulage à plat.

On remarquera que, dans cette configuration, le système est moins sensible aux variations de pression liées à l'équilibre de réaction de la composition chimique dés lors que le volume occupé par les éléments cellulaire est sensiblement constant.

En cas de perte de pression, la bande de roulement s'affaisse sur les éléments cellulaires qui, sans changer sensiblement de volume au point de remplir complètement l'espace intérieur du pneumatique, procurent alors un appui suffisant pour supporter la charge du véhicule.

Ainsi, en réalisant la formation du gaz de remplissage des éléments cellulaires après le montage du pneumatique sur la jante, il est possible de manipuler un nombre important d'éléments cellulaires occupant un faible volume, et d'offrir une solution intéressante au problème lié à l'introduction d'éléments cellulaires fermés dans l'espace intérieur d'un pneumatique. Ces éléments cellulaires, avant d'avoir interagi avec une source de chaleur, présentent la souplesse de mise en oeuvre liée aux caractéristiques du matériau choisi pour en former les parois.

La description qui suit illustre des exemples pratiques de mise en oeuvre des modes préférés de réalisation de l'invention , et s'appuie sur les figures 1 à 7 dans lesquelles :
- les figures 1 et 2 représentent un mode de réalisation d'un assemblage d'éléments cellulaires,
- la figure 3 représente une vue en coupe d'un ensemble contenant un assemblage d'éléments cellulaires avant la mise en pression du pneumatique et des éléments cellulaires qu'il contient,
- la figure 4 représente une vue en coupe d'un ensemble contenant un assemblage d'éléments cellulaires après la mise en pression du pneumatique et des éléments cellulaires qu'il contient, selon un premier mode préféré de réalisation de l'invention,
- la figure 5 représente une vue en coupe d'une variante de réalisation dans laquelle les éléments cellulaires sont maintenus par une membrane élastique,
- la figure 6 représente une vue en coupe d'un ensemble selon le premier mode préféré de réalisation à pression d'utilisation réduite,
- la figure 7 représente une vue en coupe d'un ensemble contentant un assemblage d'éléments cellulaires après la mise en pression du pneumatique et des éléments cellulaires qu'il contient, selon un deuxième mode préféré de réalisation de l'invention

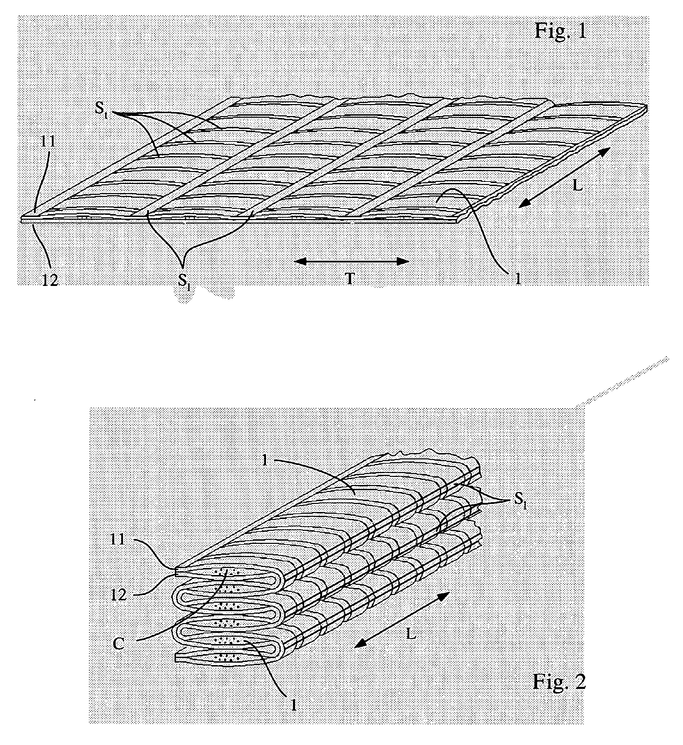

Les éléments cellulaires 1, tels qu'illustrés sur la figure 1, sont formés à partir de deux feuilles 11 et 12, constituant les parois desdits éléments cellulaires. Les feuilles 11 et 12 sont réalisées à partir d'un matériau souple de faible épaisseur, étanche à l'air et sensiblement non élastique et de préférence thermo soudable.

Des feuilles formées à partir d'un empilage de couches de type Polypropylène/EVOH/Polypropylène ou encore de type Polypropylène/Polyamide/EVOH/Polyamide/Polypropylène, ont donné de bons résultats. Elles présentent également la propriété d'être thermo-soudables, ce qui facilite la réalisation de cellules à l'échelle industrielle. Le soudage s'effectue de manière localisée et dégage une quantité de chaleur négligeable et insuffisante pour modifier sensiblement l'équilibre chimique du composant disposé à l'intérieur de l'élément cellulaire.

Les feuilles sont soudées entre elles par des soudures longitudinales Si et par des soudures transversales Sₜ. Les directions longitudinales et transversales étant repérées respectivement par les flèches L et T. Une quantité déterminée de la composition chimique C est déposé dans chacune des cellules avant de procéder à leur fermeture complète. On obtient alors un assemblage d'éléments cellulaires juxtaposés les uns aux autres. Grâce à la faible dissipation thermique de la soudure, il n'y a pas de risque d'initier la réaction chimique ou le changement de phase de la composition chimique au cours de cette opération.

La taille des cellules, qui est directement déterminée par l'espacement des soudures , est choisie de manière à ce que leur volume unitaire soit très inférieur au volume de l'espace intérieur du pneumatique P. Ce volume peut varier de quelques cm³ à quelques dizaines de cm³. Typiquement, de bons résultats ont été obtenus avec des cellules d'un volume de 75 cm³ environ, ce qui a conduit à espacer les soudures longitudinales Sₗ de 8cm et les soudures transversales Sₜ de 4 cm. Ces valeurs sont données à titre indicatif, et il va de soi qu'il est également possible de choisir des dimensions plus faibles ou plus importantes en fonction de la taille du pneumatique dans lequel on souhaite disposer ces éléments cellulaires.

On pourrait détacher les éléments cellulaires les uns des autres de manière à obtenir des éléments cellulaires unitaires. Toutefois il s'avère intéressant de fabriquer des assemblages d'éléments cellulaires en réalisant des bandes d'une largeur donnée dans la direction transversale et de grande longueur dans la direction longitudinale. Ces bandes de très faible épaisseur peuvent être manipulées aisément et sont suffisamment souples pour être enroulées sur des bobines faciles à stockées et à distribuer.

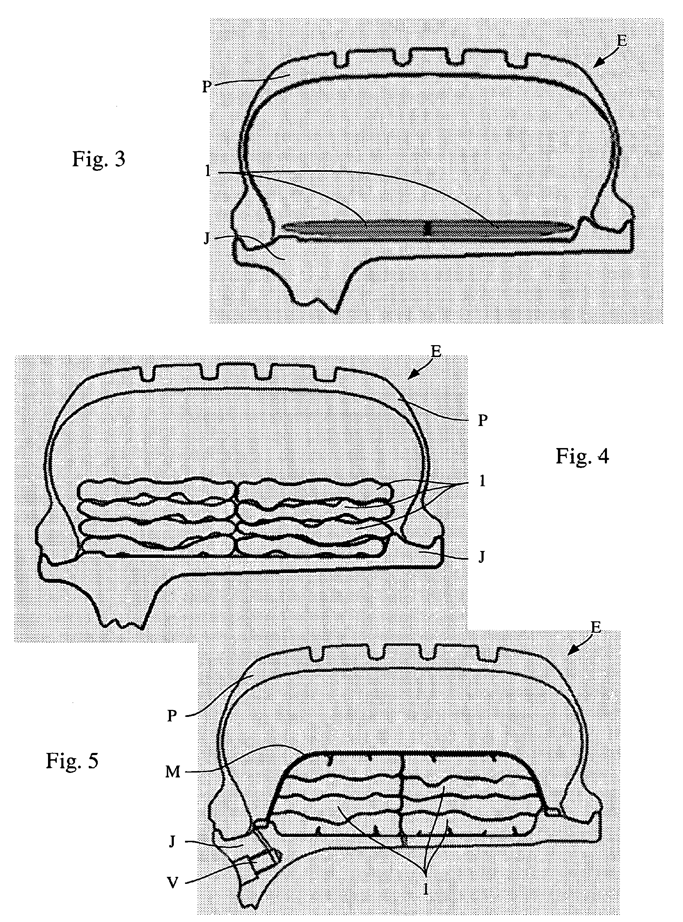

Les bandes sont découpées en tronçons d'une longueur déterminée en fonction de la circonférence de la jante J et du pneumatique P dans lequel on cherche à introduire ledit tronçon. On enroule ce tronçon à l'intérieur du pneumatique sur un ou plusieurs tours, en veillant cependant à ce que la longueur enroulée à chaque tour corresponde à la circonférence de la bande lorsque les éléments cellulaires se déploient sous l'effet de la formation du gaz et de l'éventuelle perte de pression accidentelle dans le pneumatique P, et puissent prendre le volume maximum qu'ils sont destinés à occuper. Ainsi, lorsque les cellules augmentent de volume, la couche d'éléments cellulaires disposée radialement vers l'extérieur est destinée à se placer sur une circonférence sensiblement égale à la circonférence de la partie interne du pneumatique P située sous la bande de roulement, alors que la couche située en contact de la jante J restera sensiblement dans la même position. Une fois les éléments cellulaires disposés sur la jante J, il est alors possible de monter le pneumatique P sur la jante J comme cela est illustré à la figure 3.

Une alternative à la méthode de mise en oeuvre exposée ci-dessus, consiste prélever dans la bande continue un tronçon d'une longueur correspondant à la circonférence maximum de la couche de cellules situées sur la partie radialement la plus proche de la bande de roulement lorsque les éléments cellulaires occupent leur volume maximum. On plie le tronçon en accordéon le long des soudures longitudinales Si de manière à obtenir un tronçon de la largeur d'un ou plusieurs éléments cellulaires et comprenant plusieurs couches disposées les unes au-dessus des autres, comme cela est illustré sur la figure 2. De la même manière que précédemment, on enroule ce tronçon à l'intérieur du pneumatique, généralement sur un tour. Il est possible également d'abouter, par thermo soudage, les deux extrémités dudit tronçon de manière à réaliser un anneau de la circonférence désirée, que l'on dispose sur la jante J avant de monter le pneumatique P. En fonction de la largeur de la jante J et de la largeur de l'anneau, on choisira d'enrouler un ou plusieurs anneaux de ce type en les juxtaposant dans la direction transversale.

De manière à maintenir la cohésion de ces assemblages de couches formées par les éléments cellulaires, il est possible de disposer une membrane élastique M sur la dernière couche. Cette membrane, comme on le verra par la suite, peut être d'une grande utilité pour améliorer le maintien desdits éléments cellulaires pendant le roulage.

L'ensemble E constitué du pneumatique P, de la jante J et comprenant les éléments cellulaires disposés dans l'espace intérieur compris entre la jante J et le pneumatique P, peut alors être gonflé à la pression d'utilisation par l'intermédiaire de la valve de gonflage V. Dés le premier échauffement du pneumatique la composition chimique C contenue dans les cellules va se transformer en gaz sous l'effet de l'apport thermique, et provoquer l'extension des éléments cellulaires jusqu'à ce que la pression dans les cellules soit en équilibre avec la pression de gonflage ou jusqu'à ce que les éléments cellulaires occupent leur volume maximum. De manière alternative on peut prévoir de porter l'ensemble E à une température permettant d'activer la réaction ou le changement de phase de la composition chimique C.

Les figures 4, 5 et 6 illustrent la disposition des éléments cellulaires selon le premier mode de réalisation de l'invention.

La figure 4 montre l'état d'un ensemble E une fois que l'espace intérieur ait été porté à la pression normale d'utilisation, et dans lequel la pression à l'intérieur des cellules s'équilibre avec la pression de gonflage. Ceci nécessite d'ajuster la pression de gonflage après avoir réalisé l'augmentation de volume des éléments cellulaires de manière à ce que les cellules n'occupent qu'une fraction de l'espace intérieur du pneumatique P.

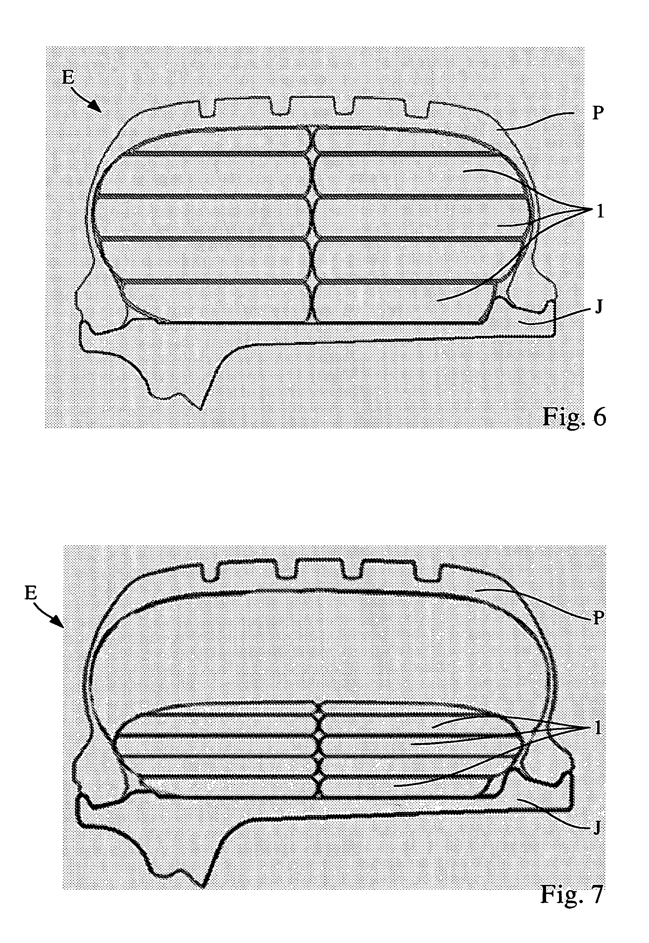

En disposant une membrane M sur la couche radialement externe de l'assemblage d'éléments cellulaires, comme cela est illustré sur la figure 5, on assure le maintien des éléments cellulaires. L'élasticité de cette membrane peut être ajustée pour combattre également les effets de la force centrifuge lorsque l'ensemble E est mis en rotation tout en permettant aux éléments cellulaires de se déployer à leur volume maximum en cas de perte de pression accidentelle de l'ensemble E comme cela est illustré à la figure 6.

Les effets de la pression de gonflage et de la pression exercée par la membrane sur les éléments cellulaires se combinent, avec pour conséquence d'augmenter légèrement la pression à l'intérieur des éléments cellulaires. La quantité de composant chimique C doit donc être ajustée en conséquence de manière à ce que les éléments cellulaires occupent dans les conditions normales de roulage un espace correspondant à la fraction désirée du volume intérieur du pneumatique P.

La figure 7 illustre la disposition des éléments cellulaires selon un autre mode préféré de réalisation de l'invention.

Dans ce second cas, la pression à l'intérieur les éléments cellulaires est supérieure à la pression de gonflage, et les cellules occupent leur volume maximum une fois que la réaction chimique ou le changement de phase du composé C est achevé. Cette augmentation de volume a pour effet de mettre en tension les parois des éléments cellulaires, et de procurer une rigidité radiale et circonférentielle suffisante à l'assemblage pour qu'il ne soit pas nécessaire, en raison également du faible poids des parois en regard de leur résistance à la traction, de disposer une membrane M pour lutter contre les effets de la force centrifuge.

En cas de perte de pression dans l'espace intérieur, le pneumatique s'affaisse et vient reposer sur la surface des éléments cellulaires situés radialement vers l'extérieur. Les éléments cellulaires se comportent alors comme un support analogue aux supports rigides tels que décrits par exemple dans le brevet EP 0 748 287.

Les figures servant de support à la description montrent un ensemble E dans lesquels les sièges des bourrelets sont inclinés vers l'extérieur comme décrit dans le brevet cité ci-dessus. Toutefois, l'invention n'est pas limitée à ce type d'ensemble et pourrait tout à fait être mise en oeuvre dans un ensemble comprenant un pneumatique monté sur des jantes inclinées vers l'intérieur.

## Revendications

1. Eléments cellulaires (1) fermés destinés à être utilisés à l'intérieur d'un ensemble (E) formé d'une roue comprenant une jante (J) dotée d'une valve de gonflage (V), sur laquelle est monté un pneumatique (P), lesdits éléments cellulaires (1) ayant des parois formées à partir de feuilles souples de faible épaisseur et étanches aux gaz (11, 12),
**caractérisés en ce qu'**ils enferment une quantité donnée d'une composition chimique (C), solide ou liquide à température ambiante, et passant à l'état gazeux lorsqu'ils sont portés à une température supérieure à la température ambiante.

2. Eléments cellulaires selon la revendication 1 dans lesquels la composition chimique (C) passe à l'état gazeux à une température supérieure d'au moins 20°C à la température ambiante.

3. Eléments cellulaires selon la revendication 1 dans lesquels la composition chimique (C) passe à l'état gazeux à une température comprise entre 40°C et 80°C.

4. Eléments cellulaires selon l'une des revendications 1 à 3 dans lesquels la composition chimique (C) passe à l'état gazeux par changement de phase

5. Eléments cellulaires selon l'une des revendications 1 à 3 dans lesquels la composition chimique (C) passe à l'état gazeux par déplacement d'un équilibre chimique.

6. Eléments cellulaires selon la revendication 5 dans lesquels le passage à l'état gazeux de la composition chimique (C) est sensiblement irréversible.

7. Eléments cellulaires selon l'une des revendications 1 à 6 dans lesquels la composition chimique (C) comprend un mélange de bicarbonate de soude et d'acide citrique.

8. Eléments cellulaires selon l'une des revendications 1 à 6 dans lesquels la composition chimique (C) comprend du bicarbonate d'ammonium.

9. Eléments cellulaires selon l'une des revendications 1 à 6 dans lesquels la composition chimique (C) comprend un ou plusieurs produits choisis dans un groupe constitué par l'acétone, l'hexane, l'acétate d'éthyle ou le chlorure de méthylène.

10. Eléments cellulaires selon l'une des revendications 1 à 9 dans lesquels les parois (11, 12) des éléments cellulaires (1) sont formées à partir d'un matériau thermo soudable.

11. Eléments cellulaires selon la revendication 10 formés à partir d'au moins deux feuilles (11, 12), jointes localement par des soudures linéaires disposées dans le sens longitudinal (Si) et dans le sens transversal (Sₜ), et délimitant un ensemble de compartiments étanches (1), de manière à former une bande souple de faible épaisseur.

12. Eléments cellulaires fermés selon l'une des revendications là 11 dans lesquels les parois (11, 12) des éléments cellulaires (1) sont formées d'un matériau sensiblement non élastique.

13. Eléments cellulaires fermés selon l'une des revendications là 11 dans lesquels les parois (11, 12) des éléments cellulaires (1) sont formées d'un matériau élastique.

14. Ensemble (E) formé d'une jante (J) dotée d'une valve de gonflage (V), sur laquelle est monté un pneumatique (P),
**caractérisé en ce que**, il contient des éléments cellulaires fermés (1) selon la revendication 12 disposés dans l'espace intérieur formé par la jante (J) et le pneumatique (P).

15. Ensemble (E) selon la revendication 14 dans lequel le volume formé par la somme du volume maximum de chacun des éléments cellulaires (1) est supérieur au volume intérieur délimité par la jante (J) et la surface interne du pneumatique (P).

16. Ensemble (E) selon la revendication 15 dans lequel la quantité de composé chimique (C) est déterminée de telle manière que, à la suite de la réaction chimique ou du changement de phase de ladite composition chimique (C) conduisant à la formation d'un nombre donné de moles de gaz, le volume total occupé par le gaz contenu dans l'ensemble des éléments cellulaires (1) soit égal, à la pression et à la température d'utilisation du pneumatique (P), à une fraction du volume intérieur total délimité par la jante (J) et la surface interne du pneumatique (P).

17. Ensemble (E) selon la revendication 14 dans lequel le volume formé par la somme du volume maximum de chacun des éléments cellulaires (1) correspond à une fraction du volume intérieur délimité par la jante (J) et la surface interne du pneumatique (P).

18. Ensemble (E) selon la revendications 17 dans lequel la quantité de composé chimique (C) est déterminée de telle manière que, à la suite de la réaction chimique ou du changement de phase de ladite composition chimique (C) conduisant à la formation d'un nombre donné de moles de gaz, la pression du gaz contenu dans l'ensemble des éléments cellulaires soit supérieure, à la pression d'utilisation du pneumatique (P).

19. Ensemble (E) formé d'une roue jante (J) dotée d'une valve de gonflage (V), sur laquelle est monté un pneumatique (P),
**caractérisé en ce que**, il contient des éléments cellulaires fermés (1) selon la revendication 13 disposés dans l'espace intérieur formé par la jante (J) et le pneumatique (P).

20. Ensemble (E) selon la revendication 19 dans lequel la quantité de composé chimique (C) est déterminée de telle manière que, à la suite de la réaction chimique ou du changement de phase de ladite composition chimique (C) conduisant à la formation d'un nombre donné de moles de gaz, le volume total du gaz contenu dans l'ensemble des éléments cellulaires (1) soit égal, à la pression et à la température d'utilisation du pneumatique (P,) à une fraction du volume intérieur total délimité par la jante (J) et la surface interne du pneumatique (P).

21. Ensemble (E) selon l'une des revendications 14 à 20 dans lequel les éléments cellulaires (1) sont maintenus par une membrane (M) élastique exerçant sur lesdits éléments une force radiale dirigée vers la jante (J) suffisante pour combattre les effets de la force centrifuge lorsque l'ensemble (E) est mis en rotation, et se déployant sous l'effet de l'extension des éléments cellulaires.

22. Ensemble (E) selon l'une des revendications 14 à 21 dans lequel lesdits éléments cellulaires (1) sont d'un volume unitaire très inférieur au volume intérieur délimité par la jante (J) et la surface interne du pneumatique (P).

## Claims

1. Closed cellular elements (1) intended for use inside an assembly (E) formed of a wheel comprising a rim (J) provided with an inflation valve (V), on which is mounted a tyre (P), the said cellular elements (1) having walls formed from thin, flexible, gas-tight sheets (11, 12),
**characterised in that** they enclose a given quantity of a chemical composition (C), which can be solid or liquid at ambient temperature but which changes to the gaseous state when heated to a temperature higher than the ambient temperature.

2. Cellular elements according to Claim 1, in which the chemical composition (C) changes to the gaseous state at a temperature at least 20°C higher than the ambient temperature.

3. Cellular elements according to Claim 1, in which the chemical composition (C) changes to the gaseous state at a temperature between 40°C and 80°C.

4. Cellular elements according any of Claims 1 to 3, in which the chemical composition (C) changes to the gaseous state as the result of a phase change.

5. Cellular elements according any of Claims 1 to 3, in which the chemical composition changes to the gaseous state as the result of the shift of a chemical equilibrium.

6. Cellular elements according to Claim 5, in which the change of the chemical composition (C) to the gaseous state is essentially irreversible.

7. Cellular elements according any of Claims 1 to 6, in which the chemical composition (C) comprises a mixture of sodium bicarbonate and citric acid.

8. Cellular elements according any of Claims 1 to 6, in which the chemical composition (C) comprises ammonium bicarbonate.

9. Cellular elements according any of Claims 1 to 6, in which the chemical composition (C) comprises one or more products chosen from a group consisting of acetone, hexane, ethyl acetate or methylene chloride.

10. Cellular elements according any of Claims 1 to 9, in which the walls (11, 12) of the cellular elements (1) are formed of a material that can be thermally welded.

11. Cellular elements according to Claim 10, formed from at least two sheets (11, 12) joined locally by linear weld seams arranged in the longitudinal direction (Sl) and in the transverse direction (St), which delimit an array of leakproof compartments (1) so as to form a flexible strip of small thickness.

12. Closed cellular elements according to any of Claims 1 to 11, in which the walls (11, 12) of the cellular elements (1) are formed of an essentially inelastic material.

13. Closed cellular elements according to any of Claims 1 to 11, in which the walls (11, 12) of the cellular elements (1) are formed of an elastic material.

14. Assembly (E) formed of a wheel rim (J) provided with an inflation valve (V), on which is mounted a tyre (P),
**characterised in that** it contains closed cellular elements (1) according to Claim 12 arranged in the inside space delimited by the rim (J) and the tyre (P).

15. Assembly (E) according to Claim 14, in which the volume formed by the sum of the maximum volumes of each cellular element (1) is larger than the inside volume delimited by the rim (J) and the inner surface of the tyre (P).

16. Assembly (E) according to Claim 15, in which the quantity of chemical composition (C) is determined such that after the chemical reaction or phase change of the said chemical composition (C) leading to the formation of a given number of moles of gas, the total volume of the gas contained in the array of cellular elements (1) is equal, at the service pressure and temperature of the tyre (P), to a fraction of the total inside volume delimited by the rim (J) and the inner surface of the tyre (P).

17. Assembly (E) according to Claim 14, in which the volume formed by the sum of the maximum volumes of each cellular element (1) corresponds to a fraction of the inside volume delimited by the rim (J) and the inner surface of the tyre (P).

18. Assembly (E) according to Claim 17, in which the quantity of chemical composition (C) is determined such that after the chemical reaction or phase change of the said chemical composition (C) leading to the formation of a given number of moles of gas, the pressure of the gas contained in the array of cellular elements is higher than the service pressure of the tyre (P).

19. Assembly (E) formed of a wheel rim (J) provided with an inflation valve (V), on which is mounted a tyre (P),
**characterised in that** it contains closed cellular elements (1) according to Claim 13 arranged in the inside space formed by the rim (J) and the tyre (P).

20. Assembly (E) according to Claim 19, in which the quantity of chemical composition (C) is determined such that after the chemical reaction or phase change of the said chemical composition (C) leading to the formation of a given number of moles of gas, the total volume of the gas contained in the array of cellular elements (1) is equal, at the service pressure and temperature of the tyre (P), to a fraction of the total inside volume delimited by the rim (J) and the inner surface of the tyre (P).

21. Assembly (E) according any of Claims 14 to 20, in which the cellular elements (1) are held by an elastic membrane (M) which exerts on the said elements a radial force directed towards the rim (J) that is large enough to counteract the effects of centrifugal force when the assembly (E) rotates, and which expands under the action of the extension of the cellular elements.

22. Assembly (E) according any of Claims 14 to 21, in which the said cellular elements (1) have a unitary volume very much smaller than the inside volume delimited by the rim (J) and the inner surface of the tyre (P).

## Patentansprüche

1. Geschlossene Zellelemente (1), die zur Verwendung im Inneren einer Anordnung (E) bestimmt sind, die aus einem Rad gebildet ist, das eine Felge (J), die mit einem Auffüllventil (V) ausgestattet ist, umfasst, auf dem ein Reifen (P) montiert ist, wobei die Zellelemente (1) Wände aufweisen, die aus weichen Folien gebildet sind, welche von geringer Dicke sind und gasdicht sind (11, 12),
**dadurch gekennzeichnet, dass** sie eine vorgegebene Menge an einer chemischen Zusammensetzung (C) umgeben, die bei Raumtemperatur fest oder flüssig ist und in den gasförmigen Zustand übergeht, wenn sie auf eine Temperatur gebracht werden, die über der Raumtemperatur liegt.

2. Zellelemente nach Anspruch 1, wobei die chemische Zusammensetzung (C) bei einer Temperatur, die mindestens 20 °C über der Raumtemperatur liegt, in den gasförmigen Zustand übergeht.

3. Zellelemente nach Anspruch 1, wobei die chemische Zusammensetzung (C) bei einer Temperatur zwischen 40 °C und 80 °C in den gasförmigen Zustand übergeht.

4. Zellelemente nach einem der Ansprüche 1 bis 3, wobei die chemische Zusammensetzung (C) durch Phasenänderung in den gasförmigen Zustand übergeht.

5. Zellelemente nach einem der Ansprüche 1 bis 3, wobei die chemische Zusammensetzung (C) durch Verschiebung eines chemischen Gleichgewichts in den gasförmigen Zustand übergeht.

6. Zellelemente nach Anspruch 5, wobei der Übergang der chemischen Zusammensetzung (C) in den gasförmigen Zustand im Wesentlichen irreversibel ist.

7. Zellelemente nach einem der Ansprüche 1 bis 6, wobei die chemische Zusammensetzung (C) eine Mischung aus Natron und Zitronensäure umfasst.

8. Zellelemente nach einem der Ansprüche 1 bis 6, wobei die chemische Zusammensetzung (C) Ammoniumbicarbonat umfasst.

9. Zellelemente nach einem der Ansprüche 1 bis 6, wobei die chemische Zusammensetzung (C) ein Produkt oder mehrere Produkte umfasst, das/die aus der Gruppe bestehend aus Azeton, Hexan, Ethylazetat oder Methylchlorid ausgewählt ist/sind.

10. Zellelemente nach einem der Ansprüche 1 bis 9, wobei die Wände (11, 12) der Zellelemente (1) aus einem heißsiegelbaren Material gebildet sind.

11. Zellelemente nach Anspruch 10, die aus mindestens zwei Folien (11, 12) gebildet sind, welche örtlich durch lineare, in der Längsrichtung (S₁) und in der Querrichtung (Sₜ) angeordnete Schweißnähte zusammengefügt sind und eine Anordnung von dichten Fächern (1) abgrenzen, um so ein nachgiebiges Band mit geringer Dicke zu bilden.

12. Geschlossene Zellelemente nach einem der Ansprüche 1 bis 11, wobei die Wände (11, 12) der Zellelemente (1) aus einem im Wesentlichen nicht elastischen Material gebildet sind.

13. Geschlossene Zellelemente nach einem der Ansprüche 1 bis 11, wobei die Wände (11, 12) der Zellelemente (1) aus einem elastischen Material gebildet sind.

14. Anordnung (E), die aus einer Felge (J), welche mit einem Auffüllventil (V) ausgestattet ist, gebildet ist, auf der ein Reifen (P) montiert ist,
**dadurch gekennzeichnet, dass** sie geschlossene Zellelemente (1) nach Anspruch 12 enthält, die im Innenraum angeordnet sind, der durch die Felge (J) und den Reifen (P) gebildet wird.

15. Anordnung (E) nach Anspruch 14, wobei das Volumen, das aus der Summe des Höchstvolumens von jedem der Zellelemente (1) gebildet ist, größer als das Innenvolumen ist, das durch die Felge (J) und die Innenfläche des Reifens (P) abgegrenzt ist.

16. Anordnung (E) nach Anspruch 15, wobei die Menge der chemischen Verbindung (C) derart bestimmt wird, dass nach der chemischen Reaktion oder der Phasenänderung der chemischen Zusammensetzung (C), die zur Bildung einer vorgegebenen Anzahl an Gasmolen führt, das Gesamtvolumen, das vom Gas eingenommen wird, welches in der Gesamtheit der Zellelemente (1) enthalten ist, bei Arbeitsdruck und Arbeitstemperatur des Reifens (P) einem Bruchteil des gesamten Innenvolumens, das durch die Felge (J) und die Innenfläche des Reifens (P) abgegrenzt ist, entspricht.

17. Anordnung (E) nach Anspruch 14, wobei das Volumen, das aus der Summe des Höchstvolumens von jedem der Zellelemente (1) gebildet ist, einem Bruchteil des Innenvolumens, das durch die Felge (J) und die Innenfläche des Reifens (P) abgegrenzt ist, entspricht.

18. Anordnung (E) nach Anspruch 17, wobei die Menge der chemischen Verbindung (C) derart bestimmt wird, dass nach der chemischen Reaktion oder der Phasenänderung der chemischen Zusammensetzung (C), die zur Bildung einer vorgegebenen Anzahl an Gasmolen führt, der Druck des Gases, das in der Gesamtheit der Zellelemente enthalten ist, größer als der Arbeitsdruck des Reifens (P) ist.

19. Anordnung (E), die aus einem Felgenrad (J), welches mit einem Auffüllventil (V) ausgestattet ist, gebildet ist, auf dem ein Reifen (P) montiert ist,
**dadurch gekennzeichnet, dass** sie geschlossene Zellelemente (1) nach Anspruch 13 enthält, die im Innenraum angeordnet sind, der durch die Felge (J) und den Reifen (P) gebildet wird.

20. Anordnung (E) nach Anspruch 19, wobei die Menge der chemischen Verbindung (C) derart bestimmt wird, dass nach der chemischen Reaktion oder der Phasenänderung der chemischen Zusammensetzung (C), die zur Bildung einer vorgegebenen Anzahl an Gasmolen führt, das Gesamtvolumen des Gases, das in der Gesamtheit der Zellelemente (1) enthalten ist, bei Arbeitsdruck und Arbeitstemperatur des Reifens (P) einem Bruchteil des gesamten Innenvolumens, das durch die Felge (J) und die Innenfläche des Reifens (P) abgegrenzt ist, entspricht.

21. Anordnung (E) nach einem der Ansprüche 14 bis 20, wobei die Zellelemente (1) von einer elastischen Membran (M) gehalten werden, die auf diese Elemente eine Radialkraft ausübt, welche auf die Felge (J) gerichtet ist und ausreicht, um den Einwirkungen der Zentrifugalkraft entgegenzuwirken, wenn die Anordnung (E) in Drehung versetzt wird, und die sich unter der Einwirkung der Ausdehnung der Zellelemente entfaltet.

22. Anordnung (E) nach einem der Ansprüche 14 bis 21, wobei die Zellelemente (1) aus einem einheitlichen Volumen sind, das weit unter dem Innenvolumen liegt, welches durch die Felge (J) und die Innenfläche des Reifens (P) abgegrenzt ist.
